# EUROPÄISCHE PATENTSCHRIFT

(11) **EP 1 963 167 B1**
(45) Veröffentlichungstag und Bekanntmachung des Hinweises auf die Patenterteilung: **31.03.2010**
(21) Anmeldenummer: 06830677.8
(22) Anmeldetag: 18.12.2006
(51) Int. Cl.: B62D 53/08

(54) **SLIDER MIT HYDRAULIKZYLINDER**
SLIDER COMPRISING A HYDRAULIC CYLINDER
DISPOSITIF DE DEPLACEMENT A VERIN HYDRAULIQUE

(30) Priorität: 16.12.2005 DE 102005060124
(43) Veröffentlichungstag der Anmeldung: 03.09.2008
(73) Patentinhaber: JOST-Werke GmbH, 63263 Neu-Isenburg (DE)
(72) Erfinder: ALGÜERA, José Manuel, 63739 Aschaffenburg (DE); RICHTER, Martin, 60389 Frankfurt am Main (DE)
(74) Vertreter: Fuchs
(86) Internationale Anmeldenummer: PCT/EP2006/069834
(87) Internationale Veröffentlichungsnummer: WO 2007/068762

(56) Entgegenhaltungen:
- EP-A- 0 503 954
- WO-A-99/24312
- WO-A-02/070328
- DE-A1- 1 780 488
- DE-A1- 4 324 289
- DE-C1- 19 944 684
- FR-A- 2 625 472
- US-A1- 4 429 892

## Beschreibung

Die Erfindung betrifft eine Verschiebevorrichtung für eine auf einem Zugfahrzeug angeordnete Sattelkupplung umfassend einen Unterbau mit mindestens zwei in Fahrtrichtung ausgerichteten Führungsschienen, einen verfahrbaren Schlitten, welcher die Sattelkupplung trägt und an den Führungsschienen angreift, sowie eine motorische Antriebseinheit.

Verschiebevorrichtungen sind beispielsweise aus der DE-AS 17 80 488, der EP 0 503 954 A1 oder der DE 199 44 684 C1 bekannt.

Ferner ist aus der WO 02/070328 A1 eine Verschiebevorrichtung bekannt, die zwei Führungsschienen mit Zahnleisten aufweist, auf denen ein Schlitten verschiebbar gelagert ist, der eine Sattelkupplung trägt. An dem Schlitten ist eine Verriegelungseinrichtung mit Sperrbacken angeordnet, die in Zahnleisten eingreifen.

Die US-A-4429892 offenbart eine Verschiebevorrichtung gemäß dem Oberbegiff des Anspruchs 1.

Die bisher bekannt gewordenen Verschiebevorrichtungen sind dafür ausgelegt, vor Beginn der. Fahrt eine Einstellung hinsichtlich des Abstandes von Zugfahrzeug und Auflieger-vorzunehmen. Es hat sich jedoch gezeigt, das der Spalt oder Zwischenraum, der zwischen der Aufliegerfront und dem Fahrerhaus der Zugmaschine entsteht, während der Fahrt zu aerodynamischen Verwirbelungen führt, die den Luftwiderstand und somit den Kraftstoffverbrauch des Sattelzuges beeinflussen.

Um diesem Effekt entgegenzuwirken, werden häufig Windabweiser auf dem Fahrerhaus der Zugmaschine montiert, um die Luft gezielt über den Spalt zu leiten. Darüber hinaus ist es grundsätzlich sinnvoll, den Spalt oder Zwischenraum so klein wie möglich zu gestalten. Andererseits könnte ein zu klein eingestellter Spalt durch Kurvenfahren oder Lastwechselreaktionen bei Bremsungen des Sattelzuges zu einem Anschlagen der Aufliegerfront beziehungsweise deren Ecken an dem Fahrerhaus führen.

Auch kann es Situationen geben, bei denen es sinnvoll ist, einen großen Spalt zuzulassen, um beispielsweise Platz für Aggregate zu schaffen oder bei stehendem Fahrzeug die Zugänglichkeit zu den Versorgungsleitungen und deren Anschlüssen zu verbessern.

Mit den bekannten Verschiebevorrichtungen ist zwar eine Veränderung des Spaltes zwischen Zugfahrzeug und Auflieger möglich, der Fahrer muss jedoch die Mechanik der Verschiebevorrichtung öffnen, dann die Größe des Spaltes durch Verfahren der Zugmaschine verändern, die Mechanik wieder verriegeln und sich von deren ordnungsgemäßen Verriegelungszustand überzeugen. Das Verfahren der Sattelkupplung und somit des Aufliegers relativ zu dem Zugfahrzeug kann auch mittels einer motorischen Antriebseinheit unterstützt werden. Dieser Vorgang erfordert einiges an Übung und kann zu erheblicher körperlicher Belastung bei den Fahrern führen. Zudem ist dies immer nur möglich, während das Fahrzeug steht, nicht aber während der Fahrt.

Es ist daher Aufgabe der Erfindung, eine Verschiebevorrichtung bereitzustellen, mit der sich während der Fahrt ein an die jeweilige Fahrsituation angepasstes Spaltmaß zwischen Zugfahrzeug und Auflieger herstellen lässt.

Die Aufgabe wird erfindungsgemäß mit einer Verschiebevonichtung nach Anspruch 1 gelöst.

Durch die motorische Antriebseinheit wird es möglich, die Position der Sattelkupplung mit Hilfe des Hydraulikzylinders auch während der Fahrt in einem Regelbetrieb zu verändern. Das Spaltmaß, also die Größe des Zwischenraumes zwischen dem Fahrerhaus und dem Auflieger, ist in Abhängigkeit der Fahrsituation individuell anpassbar, so dass der Abstand bei langsamer Fahrt, zum Beispiel beim Rangieren, oder im Stand groß und bei schneller Autobahnfahrt mit geringen Lenkausschlägen des Zugfahrzeuges klein gewählt werden kann. Die Verwirbelungen zwischen Zugfahrzeug und Auflieger lassen sich dadurch insbesondere bei schneller Fahrt erheblich reduzieren. Der Verfahrweg des Schlittens beziehungsweise der ortsfest darauf angeordneten Sattelkupplung beträgt vorzugsweise zwischen 150 mm und 300 mm, besonders bevorzugt 200 mm oder optional 250 mm.

Der wesentliche Vorteil der Erfindung liegt darin, dass die Verstellung schnell erfolgen kann, insbesondere dann, wenn der Fahrer sehr spät reagiert. Dieses ist zum Beispiel dann der Fall, wenn der Fahrer mit ' einer zu hohen Geschwindigkeit in eine Kurve fährt und erst im letzten Augenblick stark abbremst. Andere Szenarien einer so genannten Panikbremsung stellen eine plötzliche Vollbremsung oder scharfe Ausweichmanöver des Sattelzuges dar. Um ein Anstoßen des Aufliegers an das Zugfahrzeug zu vermeiden, muss schnellstmöglich der Spalt zwischen Zugfahrzeug und Auflieger durch Druckbeaufschlagung des Hydraulikzylinders auf ein ausreichend großes Maß erweitert werden. Die Verstellgeschwindigkeit des Schlittens sollte bei mindestens 20 mm/s oder günstiger noch 30 mm/s liegen.

Der Hydraulikzylinder sollte hierfür mit einem eigenen Hydraulikkreis ausgestattet sein, der hinsichtlich seiner Dimensionierung auf den Hydraulikzylinder abgestimmt ist und in jeder Fahrsituation einen ausreichenden Betriebsdruck für eine Panikbremsung in einem Zeitraum unter 1 Sekunde bereitstellt. Demzufolge sollte der Hydraulikkreis auch eine eigene Hydraulikpumpe aufweisen, die vorteilhafterweise eine angestrebte elektrische Leistungsaufnahme von unter 1000 Watt hat. Der Fördervolumenstrom kann zwischen 8 l/min und 12 l/min, besonders bevorzugt 10 l/min, liegen. Als Pumpentypen kommen Flügelzellenpumpen, Außenzahnradpumpen oder Mialkolbenpumpen in Frage.

Vorzugsweise greift der Hydraulikzylinder mit einem ersten Ende an dem Schlitten an und ist mit einem zweiten Ende an einer ortsfesten Komponente des Zugfahrzeuges anbringbar. Dabei sollte der Hydraulikzylinder von der Fahrerhausseite, also von vorne, an den Schlitten angreifen, damit der Einfahrbereich der Sattelkupplung frei bleibt und der Hydraulikzylinder nicht beim Ankuppeln durch den Auflieger beschädigt wird.

Es hat sich als günstig erwiesen, wenn die ortsfeste Komponente durch den Unterbau gebildet ist. Der Unterbau kann neben den Führungsschienen zur Versteifung zumindest endseitig mit Quertraversen versehen sein. Diese ermöglichen einen modularen Aufbau und können außerdem als Widerlager für das zweite Ende des Hydraulikzylinders genutzt werden.

Vorteilhafterweise ist der Hydraulikzylinder doppelwirkend ausgebildet ist, so dass ein einzelner Zylinder sowohl für die Vorwärtsbewegung als auch die Rückwärtsbewegung des Schlittens verwendet werden kann.

In einer besonderen Ausführungsform ist der doppelwirkende Hydraulikzylinder ein Gleichgangzylinder und/oder Differentialzylinder. Bei einem Gleichgangzylinder wird die gleiche Menge aus dem Zylinder herausgedrückt und auf der anderen Seite auch wieder zugeführt. Dieses ist besonders günstig, wenn kein Zwischen- oder Ausgleichsbehälter vorhanden ist.

Der Hydraulikkreis umfasst ein Steuerventil, welches den Verfahrweg des Hydraulikzylinders steuert. Dieses Steuerventil ist an ein elektronisches Steuergerät angeschlossen und erhälle von dort ein Signal zum Verfahren des Schlittens. Das Steuergerät steuert das Steuerventil sowohl bei einem Verfahren des Schlittens im Regelbetrieb als auch bei einer plötzlichen Panikbremsung.

Für ein zeitnahes Erkennen einer Panikbremsung kann das Steuergerät an ein Fahrzeugsteuergerät anschließbar sein. Hierüber können Informationen bezüglich der Fahrgeschwindigkeit abgerufen werden und somit der Spalt zwischen Zugfahrzeug und Auflieger im Regelbetrieb eingestellt werden. Moderne Zugfahrzeuge sind üblicherweise mit einem Bremsassistenten ausgestattet, der aufgrund fahrzeugimmanenter Parameter die Intensität der Verzögerung regelt. Die dabei erzeugten Signale sind besonders als Eingangssignal für das Steuergerät geeignet, um eine Panikbremsung zu identifizieren und eine äußerst schnelle Rückwärtsbewegung des Schlittens zum Vergrößern des Spaltmaßes auszulösen.

Der Schlitten ist in einem quasistationären Betriebszustand formschlüssig mittels daran angeordneter Sperrbacken an den Führungsschienen fixiert, wobei die Fixierung nur während des Verfahrens des Schlittens aufgehoben ist. Hieraus resultiert der Vorteil, dass der Hydraulikzylinder während der Fahrt, nachdem ein vorgesehener Abstand zwischen Zugfahrzeug und Auflieger eingestellt wurde, nicht den im Regelbetrieb auftretenden hohen Kräften ausgesetzt ist. Darüber hinaus wirkt auf den Hydraulikkreis ein Gegendruck, so dass eine Federwirkung reduziert und das Hydrauliksystem annähernd starr mit hohem Druck bereitsteht. Im Falle einer Panikbremsung wird die Reaktionszeit des Hydrauliksystems dadurch weiter verringert.

Zum Bedienen der Sperrbacken ist an dem Schlitten ein Stellglied angeordnet, welches die Sperrbacken in eine Entriegelungsstellung und eine Verriegelungsstellung verfährt, wobei hierzu als Stellglied ein Pneumatikzylinder besonders geeignet ist.

Günstigerweise ist der Pneumatikzylinder an eine Druckluftversorgung des Zugfahrzeuges anschließbar. Die Beaufschlagung des Pneumatikzylinders sollte über elektromagnetische Ventile erfolgen. Die elektromagnetischen Ventile sind mit dem Steuergerät verbunden, so dass das Verfahren der Sperrbacken in die Entriegelungs- oder Veniegelungsstellung logisch an die Verstellfunktion des Hydraulikzylinders gekoppelt ist.

Diese konstruktive Ausgestaltung lässt sehr schnelle Reaktionszeiten im Falle einer Panikbremsung zu und ist überdies einfach zu installieren, da eine Druckluftversorgung auf dem Zugfahrzeug ohnehin vorhanden ist und ein offener pneumatischer Kreislauf gewählt werden kann.

In einer ersten Ausführungsform ist auch der Hydraulikkreis als offener Kreis aufgebaut.

Dabei sollte zwischen der Pumpe und dem Steuerventil eine Druckspeichereinrichtung, besonders bevorzugt ein Blasenspeicher, angeordnet sein. Auch wenn auf dem Markt bereits schnell anlaufende Pumpen verfügbar sind, lässt sich durch Installation einer Druckspeichereinrichtung die Reaktionszeit der gesamten Verschiebevorrichtung noch erheblich weiter reduzieren, was insbesondere im Falle einer Panikbremsung von großer Wichtigkeit ist.

Als Steuerventil kommt besonders bevorzugt ein 4/3-Wege-Ventil in Frage.

Vorzugsweise ist zwischen der Pumpe und dem Steuerventil ein Druckschalter angeordnet. Der Druckschalter gibt ein elektrisches Signal ab, welches bei einem vorwählbaren Druck ausgelöst wird. Als Druckschalter können Kolben, Membrane und Wellrohre als Druck übertragendes Element zum Einsatz kommen. Mit Hilfe des Druckschalters erfolgt allgemein eine Einleitung von Steuer- und Regelsignalen in den Hydraulikkreis, die Meldung bestimmter Druckwerte beispielsweise an das Steuergerät und eine automatische Druckbegrenzung. Diese wird insbesondere erreicht, wenn der Druckschalter den Betrieb der Pumpe steuert. Dieses kann durch eine Steuerleitung direkt von dem Druckschalter zu der Pumpe oder indirekt über eine Steuerleitung zu dem Steuergerät und von dort zu der Pumpe realisiert werden.

Bei der Ausführungsform mit einem offenen Hydraulikkreislauf sollte hinter dem Steuerventil zwischen einer zuführenden und abführenden Leitung des Hydraulikzylinders ein 2/2-Wege-Ventil mit Rückschlagventil angeordnet sein. Diese Anordnung lässt eine Fail-Save-Funktion zu, wodurch bei einem Systemausfall der Hydraulikzylinder allein durch äußere Kräfte gestreckt und somit ein größere Spalt zwischen Zugfahrzeug und Auflieger eingestellt wird. In die Fail-Save-Funktion sind gegebenenfalls die Funktion der Sperrbacken beziehungsweise deren Stellglied mit einzubeziehen.

In einer zweiten alternativen Ausführungsform kann der Hydraulikkreis auch als geschlossener Kreis aufgebaut sein.

Vorteilhafterweise ist die Pumpe in zwei Förderrichtungen umschaltbar und beaufschlagt in Abhängigkeit der gewünschten Verfahrrichtung der Kolbenstange einen jeweiligen Druckraum innerhalb des Hydraulikzylinders. Das Umschalten der Verfahrrichtung und somit die Steuerung des Hydraulikzylinders kann bei Verwendung einer Konstantpumpe durch Umkehr der Drehrichtung der Pumpe erfolgen. Bei einer Verstellpumpe kann die Steuerung des Hydraulikzylinders durch Verstellung der Förderrichtung erfolgen.

Im Falle einer Panikbremsung kann die Schnellverstellung des Hydraulikzylinders entgegen der Fahrtrichtung durch ein vorgespanntes Federelement ausgelöst sein.

Unabhängig von der Wahl eines geschlossenen oder offenen Kreises sollte aus Sicherheitsgründen zwischen der Pumpe und dem Steuerventil ein Druckbegrenzungsventil angeordnet sein.

Zum besseren Verständnis wird die Erfindung nachfolgend anhand von 8 Zeichnungsfiguren näher erläutert. Dabei zeigen die:
- **Fig. 1:**: eine Seitenansicht auf einen Sattelzug mit maximalem Spaltmaß zwischen Zugfahrzeug und Auflieger bei Geradeausfahrt;
- **Fig. 2:**: eine Draufsicht auf einen Sattelzug mit maximalem Spaltmaß zwischen Zugfahrzeug und Auflieger bei Kurvenfahrt;
- **Fig. 3:**: eine Ansicht gemäß Fig. 1 mit reduziertem Spaltmaß;
- **Fig. 4:**: eine Seitenansicht auf eine Verschiebevorrichtung;
- **Fig. 5:**: eine Draufsicht auf eine Verschiebevorrichtung;
- **Fig. 6:**: eine Unteransicht auf eine Verschiebevorrichtung;
- **Fig. 7:**: einen schematischer Schaltplan einer Verschiebevorrichtung mit offenem Hydraulikkreis und
- **Fig. 8:**: einen schematischen Schaltplan einer Verschiebevorrichtung mit geschlossenem Hydraulikkreis.

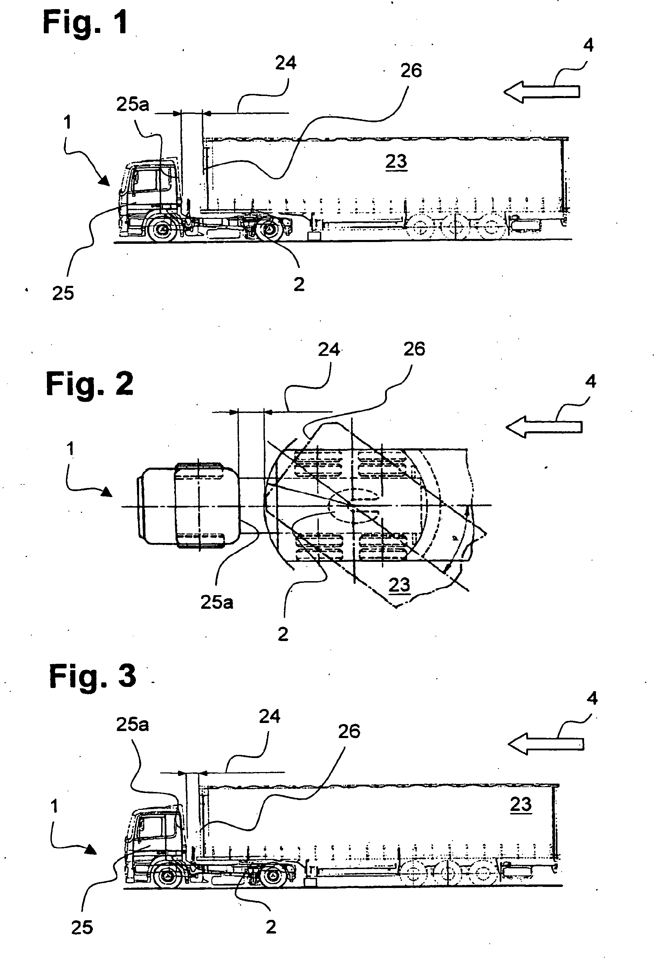

Die Figur 1 zeigt eine Seitenansicht eines konventionellen Sattelzuges mit einem Zugfahrzeug 1 und einem mittels einer Sattelkupplung 2 daran angekuppelten Auflieger 23 bei Geradeausfahrt. Das Zugfahrzeug 1 weist ein Fahrerhaus 25 auf, dessen Rückwand 25a mit einer Aufliegerfront 26 ein Spaltmaß 24 bildet. In dieser dargestellten Position von Zugfahrzeug 1 und Auflieger 23 beträgt das Spaltmaß 24 ca. 600 mm.

Das Spaltmaß 24 ist notwendig, damit auch bei eingelenktem Zugfahrzeug 1 ein ausreichender Abstand zwischen der Aufliegerfront 26 und der Fahrerhausrückwand 25a gewahrt bleibt, wie in der vergrößerte Draufsicht der Figur 2 erkennbar ist. Bei einem zueinander abgewinkelten Zugfahrzeug 1 und Auflieger 23 hat sich das Spaltmaß 24 auf ca. 250 mm verringert.

In der Figur 3 ist der Sattelzug in einer Seitenansicht bei Geradeausfahrt dargestellt, wobei das Spaltmaß 24 durch Verschieben der Sattelkupplung 2 in Fahrtrichtung 4 erheblich reduziert ist. Dieses ist insbesondere bei Autobahnfahrten sinnvoll, da hierbei die Fahrtgeschwindigkeit hoch und sich die zu erwartende Reduzierung des Luftwiderstandes besonders günstig bemerkbar macht. Gleichzeitig sind bei Autobahnfahrten nur geringe Lenkausschläge des Zugfahrzeuges 1 vorhanden.

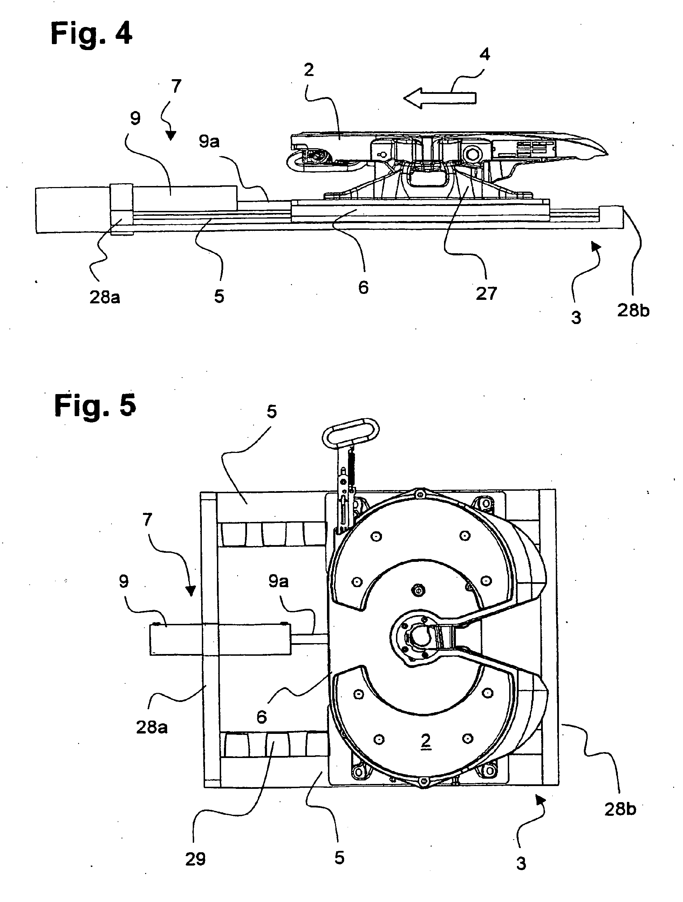

Eine Reduzierung und gegebenenfalls auch Erweiterung des Spaltmaßes 24 wird durch Einsatz der erfindungsgemäßen Verschiebevorrichtung gemäß Figur 4 möglich. Die Sattelkupplung 2 ist mittels zweier Lagerböcke 27, von denen in der Seitenansicht der Figur 4 nur der vordere sichtbar ist, ortsfest auf einem Schlitten 6 befestigt. Der Schlitten 6 ist in und entgegen der Fahrtrichtung 4 verschiebbar auf einem Unterbau 3 geführt. Der Unterbau 3 setzt sich aus zwei parallel zueinander beabstandeten Führungsschienen 5 und endseitig daran angreifenden vorderen und hinteren Quertraversen 28a, 28b zusammen. An der vorderen Quertraverse 28a ist als motorische Antriebseinheit 7 ein Hydraulikzylinder 9 befestigt, dessen Kolbenstange 9a nach hinten ragt und endseitig mit dem Schlitten 6 verbunden ist. Bei einem Verfahren der Kolbenstange 9a wird in gleichem Maße der Schlitten 6 und somit auch die Sattelkupplung 2 lateral verschoben.

Die Figur 5 zeigt eine Draufsicht auf die Verschiebevorrichtung, wobei besonders gut die Anordnung des Hydraulikzylinders 9 an dem kastenartigen Unterbau 3 zu sehen ist. Um den Hydraulikzylinder 9 während des Fahrbetriebes zu entlasten, sind an den Führungsschienen 5 und dem Schlitten 6 Verriegelungsmittel vorhanden, mit denen eine lösbare formschlüssige Verbindung zwischen Schlitten 6 und Unterbau 3 hergestellt werden kann. Seitens der Führungsschienen 5 handelt es sich um eine Verzahnung 29, die auf den zueinander gerichteten Innenseiten der Führungsschienen 5 ' ausgebildet sein kann.

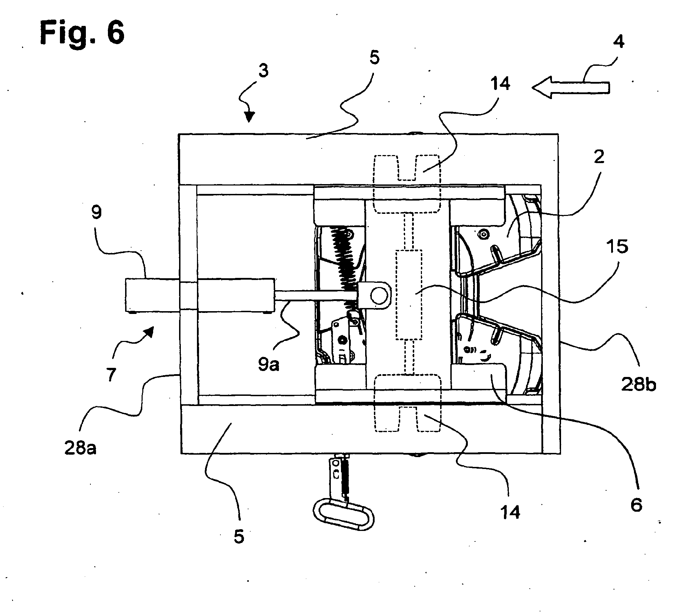

In der Unteransicht der Figur 6 sind an dem Schlitten 6 gegenüberliegend Sperrbacken 14 vorgesehen, die zum formschlüssigen Verriegeln des Schlittens 6 synchron in die Verzahnung 29 gemäß Figur 5 eingreifen können. Das Ver- und Entriegeln der Sperrbacken 14 wird über ein Stellglied 15 realisiert. Das Stellglied 15 befindet sich zwischen den Lagerböcken 27 auf der Oberseite des Schlittens 6 unterhalb der Sattelkupplung 2.

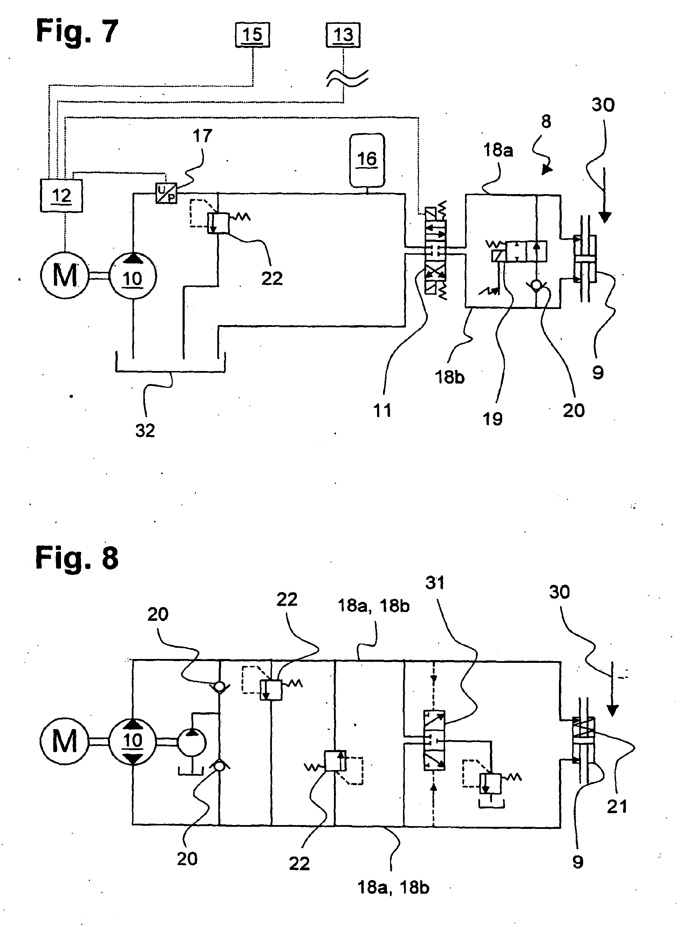

Das Zusammenwirken der einzelnen Komponenten in einem offenen Hydraulikkreis 8 wird anhand des schematischen Schaubildes der Figur 7 erläutert. Mit Hilfe des Hydraulikkreises 8 soll der Hydraulikzylinder 9 beziehungsweise dessen Kolbenstange 9a (siehe Figuren 4 bis 6) verfahren werden. Ein besonders plötzliches Verfahren des Schlittens 6 (siehe Figuren 4 bis 6) muss insbesondere in Pfeilrichtung 30 im Falle einer Panikbremsung gewährleistet sein.

Eine Pumpe 10 ist hierfür mit dem Hydraulikzylinder 9 über eine zuführende Leitung 18a verbunden. Eine zweite abführende Leitung 18b verläuft von dem Hydraulikzylinder 9 zu einem Rücklaufbehälter 32. Zwischen der Pumpe 10 und dem Hydraulikzylinder 9 befindet sich ein Steuerventil 11, an das beide Leitungen 18a, 18b angeschlossen sind.

Während des Fahrbetriebes wird über die Pumpe 10 ein Druck in der zuführenden Leitung 18a des Hydraulikzylinders 9 aufgebaut. Um ein besonders schnelles Verfahren der Kolbenstange 9a (siehe Figuren 4 bis 6) in Verfahrrichtung 30 zu ermöglichen, ist in der zuführenden Leitung 18a eine Druckspeichereinrichtung 16 angeordnet. Im Falle einer Panikbremsung steht dadurch sofort ein ausreichendes Druckreservoir zur Verfügung, so dass eine geringe Anlaufverzögerung der Pumpe 10 überbrückt werden kann und der Schlitten 6 mit der darauf befindlichen Sattelkupplung sogleich verfahren wird.

Nach dem Erreichen oder Unterschreiten eines vorgebbaren Druckes in der zuführenden Leitung 18a, wird dieser von einem Druckschalter 17 erkannt und die Pumpe 10 abgestellt oder in Betrieb gesetzt.

Während der Fahrt des Sattelzuges wird über die Schaltstellung des Steuerventils 11 der Verfahrweg des Hydraulikzylinders 9 gesteuert. Hierfür ist das Steuerventil 11 mit einem Steuergerät 12 verbunden, welches neben der Steuerung des Hydraulikkreises 8 auch die Steuerung des Stellgliedes 15 übernimmt. Innerhalb des Steuergerätes 12 findet eine systemimmanente Logikabfrage hinsichtlich der Position der Sattelkupplung 2 auf dem Unterbau 3 in Abhängigkeit der Fahrgeschwindigkeit des Zugfahrzeuges 1 statt. Im Falle einer Panikbremsung wird das auslösende Signal ebenfalls in dem Steuergerät 12 generiert. Das Vorliegen einer Panikbremsung wird durch Anschluss des Steuergerätes 12 an ein Fahrzeugsteuergerät 13 oder einen so genannten Bremsassistenten detektiert.

Hinter dem Steuerventil 11 ist die zuführende Leitung 18a mit der abführenden Leitung 18b über eine Bypass-Leitung mit einem 2/2-Wege-Ventil 19 und einem in Richtung der abführenden Leitung 18b sperrenden Rückschlagventil 20 verbunden. Durch diese Anordnung wird die Sattelkupplung 2 mit ihrem Schlitten 6 bei einem Systemausfall durch äußere auf den Auflieger 23 wirkende Kräfte wie Fahrtwind und Rollwiderstand in Verfahrrichtung 30 zurückgedrückt, wodurch sich nach einer kürzeren Fahrzeit des Sattelzuges ein maximales Spaltmaß 24 zwischen der Zugmaschine 1 und dem Auflieger 23 einstellt. Bei diesem Belastungsfall stößt mitunter der Schlitten 6 gegen die hintere Quertraverse 28b (siehe Figuren 4 bis 6), so dass diese stärker als die vordere Quertraverse 28b beansprucht werden kann und entsprechend stabil an den Führungsschienen 5 befestigt sein sollte.

Ein möglicherweise zu hoher Druck in der zuführenden Leitung 18a wird über ein Druckbegrenzungsventil 22 in den Rücklaufbehälter 32 abgelassen.

Die Figur 8 zeigt eine alternative Ausführungsform der Verschiebevorrichtung mit einem geschlossenen Hydraulikkreis 8, bei dem eine in ihrer Förderrichtung umschaltbare Pumpe 10 eingesetzt ist. Die Förderrichtung entspricht der gewünschten Richtung des Verfahrweges des Hydraulikzylinders 9, so dass die zuführenden beziehungsweise abführenden Leitungen 18a, 18b demzufolge in Abhängigkeit der Verfahrrichtung des Hydraulikzylinders wechselseitig mit Druck beaufschlagt sind. Beide Leitungen 18a, 18b sind gegeneinander mit Druckbegrenzungsventilen 22 abgesichert. Im Falle einer notwendigerweise schnellen Panikbremsung wird ein beschleunigtes Zurückfahren in Verfahrrichtung 30 durch ein vorgespanntes Federelement 21 ausgelöst, welches an dem Hydraulikzylinder 9 oder unmittelbar an dem Schlitten 6 angreift.

Ein unter Umständen zu hoher Druck in der als Saugleitung arbeitenden zuführenden oder abführenden Leitung 18a, 18b wird über ein Druck betätigtes 3/3-Wege-Ventil 31 abgebaut.

### Bezugszeichenliste

- 1: Zugfahrzeug
- 2: Sattelkupplung
- 3: Unterbau
- 4: Fahrtrichtung
- 5: Führungsschienen
- 6: Schlitten
- 7: motorische Antriebseinheit
- 8: Hydraulikkreis
- 9: Hydraulikzylinder
- 9a: Kolbenstange

- 10: Pumpe
- 11: Steuerventil
- 12: Steuergerät
- 13: Fahrzeugsteuergerät
- 14: Sperrbacke
- 15: Stellglied
- 16: Druckspeichereinrichtung, Blasenspeicher
- 17: Druckschalter
- 18a: zuführende Leitung Hydraulikzylinder
- 18b: abführende Leitung Hydraulikzylinder
- 19: 212-Wege-Ventil

- 20: Rückschlagventil
- 21: Federelement
- 22: Druckbegrenzungsventil
- 23: Auflieger
- 24: Spaltmaß Zugfahrzeug/Auflieger
- 25: Fahrerhaus
- 25a: Fahrerhausrückwand

- 26: Aufliegerfront
- 27: Lagerbock
- 28a: vordere Quertraverse
- 28b: hintere Quertraverse
- 29: Verzahnung Führungsschiene

- 30: Verfahrrichtung Panikbremsung
- 31: druckbetätigtes 3/3-Wege-Ventil
- 32: Rücklaufbehälter

## Patentansprüche

1. Verschiebevorrichtung für eine auf einem Zugfahrzeug (1) angeordnete Sattelkupplung (2) umfassend
- einen Unterbau (3) mit mindestens zwei in Fahrtrichtung (4) ausgerichteten Führungsschienen (5),
- einen verfahrbaren Schlitten (6), welcher die Sattelkupplung (2) trägt und an den Führungsschienen (5) angreift,
- an dem Schlitten (6) gegenüberliegend angeordnete Sperrbacken (14), welche ein formschlüssiges Verriegeln des Schlittens (6) in die Führungsschienen (5) ermöglichen, sowie ein Stellglied (15), welches die Sperrbacken (14) in eine Entriegelungsstellung und eine Verriegelungsstellung verfährt,
- eine motorische Antriebseinheit (7) mit einem an einen Hydraulikkreis (8) angeschlossenen Hydraulikzylinder (9) und einem mit einem Steuergerät (12) verbundenen Steuerventil (11), welches den Verfahrweg des Hydraulikzylinders (9) steuert,
**dadurch gekennzeichnet,**
**dass** das Steuergerät (12) neben der Steuerung des Hydraulikkreises (8) auch die Steuerung des Stellgliedes (15) übernimmt.

2. Vorrichtung nach Anspruch 1, **dadurch gekennzeichnet, dass** der Hydraulikzylinder (9) mit einem ersten Ende an dem Schlitten (6) angreift und mit einem zweiten Ende an einer ortsfesten Komponente des Zugfahrzeuges (1) anbringbar ist.

3. Vorrichtung nach Anspruch 1 oder 2, **dadurch gekennzeichnet, dass** der Hydraulikzylinder (9) doppelwirkend ausgebildet ist.

4. Vorrichtung nach Anspruch 3, **dadurch gekennzeichnet, dass** der doppelwirkende Hydraulikzylinder (9) ein Gleichgangzylinder und/oder Differentialzylinder ist.

5. Vorrichtung nach einem der Ansprüche 1 bis 4, **dadurch gekennzeichnet, dass** das Steuergerät (12) an ein Fahrzeugsteuergerät (13) anschließbar ist.

6. Vorrichtung nach einem der Ansprüche 1 bis 5, **dadurch gekennzeichnet, dass** das Stellglied (15) ein Pneumatikzylinder ist.

7. Vorrichtung nach einem der Ansprüche 1 bis 6, **dadurch gekennzeichnet, dass** der Hydraulikkreis (8) als offener Kreis aufgebaut ist.

8. Vorrichtung nach Anspruch 7, **dadurch gekennzeichnet, dass** in dem offenen Hydraulikkreis zwischen einer Pumpe (10) und dem Steuerventil (11) eine Druckspeichereinrichtung (16), besonders bevorzugt ein Blasenspeicher (16), angeordnet ist.

9. Vorrichtung nach Anspruch 8, **dadurch gekennzeichnet, dass** zwischen der Pumpe (10) und dem Steuerventil (11) ein Druckschalter (17) angeordnet ist.

10. Vorrichtung nach Anspruch 9, **dadurch gekennzeichnet, dass** der Druckschalter (17) den Betrieb der Pumpe (10) steuert.

11. Vorrichtung nach einem der Ansprüche 1 bis 6, **dadurch gekennzeichnet, dass** der Hydraulikkreis (8) als geschlossener Kreis aufgebaut ist.

12. Vorrichtung nach Anspruch 11, **dadurch gekennzeichnet, dass** eine Pumpe (10) in zwei Förderrichtungen umschaltbar ist.

13. Vorrichtung nach Anspruch 12, **dadurch gekennzeichnet, dass** die Pumpe (10) eine Konstantpumpe ist, wobei die Steuerung des Hydraulikzylinders (9) durch Umkehr der Drehrichtung erfolgt.

14. Vorrichtung nach Anspruch 12, **dadurch gekennzeichnet, dass** die Pumpe (10) eine Verstellpumpe ist, wobei die Steuerung des Hydraulikzylinders (9) durch Verstellung der Förderrichtung erfolgt.

15. Vorrichtung nach einem der Ansprüche 11 bis 14, **dadurch gekennzeichnet, dass** zur Schnellverstellung der Hub des Hydraulikzylinders (9) entgegen der Fahrtrichtung (4) durch ein vorgespanntes Federelement (21) ausgelöst ist.

## Claims

1. Displacement device for a fifth wheel (2) which is arranged on a traction vehicle (1), comprising
- a substructure (3) having at least two guide rails (5) orientated in the direction of travel (4),
- a displaceable carriage (6) which carries the fifth wheel (2) and which engages with the guide rails (5),
- clamping jaws (14) which are arranged in an opposing manner on the carriage (6) and which allow positive-locking of the carriage (6) in the guide rails (5) and an actuation member (15) which displaces the clamping jaws (14) into an unlocking position and a locking position,
- a motor-driven drive unit (7) having a hydraulic cylinder (9) which is connected to a hydraulic circuit (8) and a control valve (11) which is connected to a control device (12) and which controls the displacement path of the hydraulic cylinder (9),
**characterised in that**
the control device (12) also takes over the control of the actuation member (15) in addition to controlling the hydraulic circuit (8).

2. Device according to claim 1, **characterised in that** the hydraulic cylinder (9) engages with a first end on the carriage (6) and, with a second end, can be fitted to a fixed component of the traction vehicle (1).

3. Device according to claim 1 or claim 2, **characterised in that** the hydraulic cylinder (9) is constructed so as to have dual actions.

4. Device according to claim 3, **characterised in that** the dual-action hydraulic cylinder (9) is a synchronous cylinder and/or differential cylinder.

5. Device according to any one of claims 1 to 4, **characterised in that** the control device (12) can be connected to a vehicle control device (13).

6. Device according to any one of claims 1 to 5, **characterised in that** the actuation member (15) is a pneumatic cylinder.

7. Device according to any one of claims 1 to 6, **characterised in that** the hydraulic circuit (8) is constructed as an open circuit.

8. Device according to claim 7, **characterised in that** a pressure storage device (16), particularly preferably a hydro-pneumatic accumulator (16), is arranged in the open hydraulic circuit between a pump (10) and the control valve (11).

9. Device according to claim 8, **characterised in that** a pressure switch (17) is arranged between the pump (10) and the control valve (11).

10. Device according to claim 9, **characterised in that** the pressure switch (17) controls the operation of the pump (10).

11. Device according to any one of claims 1 to 6, **characterised in that** the hydraulic circuit (8) is constructed as a closed circuit.

12. Device according to claim 11, **characterised in that** a pump (10) can be switched between two conveying directions.

13. Device according to claim 12, **characterised in that** the pump (10) is a fixed-displacement pump, the control of the hydraulic cylinder (9) being carried out by the direction of rotation being reversed.

14. Device according to claim 12, **characterised in that** the pump (10) is a variable-displacement pump, the control of the hydraulic cylinder (9) being carried out by the conveying direction being changed.

15. Device according to any one of claims 11 to 14, **characterised in that,** for rapid adjustment, the stroke of the hydraulic cylinder (9) is initiated counter to the direction of travel (4) by a pretensioned resilient element (21).

## Revendications

1. Dispositif de déplacement destiné à une sellette d'attelage (2) située sur un véhicule tracteur (1), comprenant
- une structure sous-jacente (3) munie d'au moins deux rails de guidage (5) orientés dans la direction de déplacement (4),
- un chariot mobile (6) portant ladite sellette d'attelage (2) et venant en prise avec lesdits rails de guidage (5),
- des mâchoires de blocage (14) disposées en vis-à-vis mutuel sur ledit chariot (6) et permettant un verrouillage dudit chariot (6) dans lesdits rails de guidage (5), par concordance de formes, ainsi qu'un organe de réglage (15) amenant lesdites mâchoires de blocage (14) à une position de déverrouillage et à une position de verrouillage,
- une unité motorisée d'entraînement (7) offrant un vérin hydraulique (9) raccordé à un circuit hydraulique (8), et une vanne de commande (11) qui est reliée à un appareil de commande (12) et pilote la course de déplacement dudit vérin hydraulique (9),
**caractérisé par le fait**
**que** l'appareil de commande (12) assure également le pilotage de l'organe de réglage (15), en plus du pilotage du circuit hydraulique (8).

2. Dispositif selon la revendication 1, **caractérisé par le fait que** le vérin hydraulique (9) vient en prise avec le chariot (6) par une première extrémité et peut être implanté, par une seconde extrémité, sur un élément constitutif stationnaire du véhicule tracteur (1).

3. Dispositif selon la revendication 1 ou 2, **caractérisé par le fait que** le vérin hydraulique (9) est réalisé à double action.

4. Dispositif selon la revendication 3, **caractérisé par le fait que** le vérin hydraulique (9), à double action, est un vérin synchrone et/ou un vérin différentiel.

5. Dispositif selon l'une des revendications 1 à 4, **caractérisé par le fait que** l'appareil de commande (12) peut être raccordé à un appareil (13) de commande du véhicule.

6. Dispositif selon l'une des revendications 1 à 5, **caractérisé par le fait que** l'organe de réglage (15) est un vérin pneumatique.

7. Dispositif selon l'une des revendications 1 à 6, **caractérisé par le fait que** le circuit hydraulique (8) est structurellement agencé comme un circuit ouvert.

8. Dispositif selon la revendication 7, **caractérisé par le fait qu'**un système (16) accumulateur de pression revêtant notamment, de préférence, la forme d'un accumulateur (16) de bulles, est interposé entre une pompe (10) et la vanne de commande (11) dans le circuit hydraulique ouvert.

9. Dispositif selon la revendication 8, **caractérisé par le fait qu'**un contacteur manométrique (17) est interposé entre la pompe (10) et la vanne de commande (11).

10. Dispositif selon la revendication 9, **caractérisé par le fait que** le contacteur manométrique (17) pilote le fonctionnement de la pompe (10).

11. Dispositif selon l'une des revendications 1 à 6, **caractérisé par le fait que** le circuit hydraulique (8) est structurellement agencé comme un circuit fermé.

12. Dispositif selon la revendication 11, **caractérisé par le fait qu'**une pompe (10) peut être commutée dans deux directions de refoulement.

13. Dispositif selon la revendication 12, **caractérisé par le fait que** la pompe (10) est une pompe à cylindrée constante, la commande du vérin hydraulique (9) ayant lieu par inversion du sens de rotation.

14. Dispositif selon la revendication 12, **caractérisé par le fait que** la pompe (10) est une pompe à cylindrée variable, la commande du vérin hydraulique (9) ayant lieu par réglage de la direction de refoulement.

15. Dispositif selon l'une des revendications 11 à 14, **caractérisé par le fait que** la course du vérin hydraulique (9) est déclenchée par un élément élastique précontraint (21), en sens inverse de la direction de déplacement (4), en vue du réglage rapide.
